# EUROPEAN PATENT APPLICATION

(11) **EP 4 242 538 A1**
(43) Date of publication of application: **13.09.2023**
(21) Application number: 21927572.4
(22) Date of filing: 26.10.2021
(51) Int. Cl.: F24F 6/00, F24F 5/00

(54) **MACHINE HEAD AND COOLING FAN**

(30) Priority: 25.02.2021 CN 202110207238
(71) Applicant: Gree Electric Appliances, Inc. of Zhuhai, Zhuhai, Guangdong 519070 (CN)
(72) Inventor: LIU, Yizuo, Zhuhai, Guangdong 519070 (CN); YANG, Dehao, Zhuhai, Guangdong 519070 (CN); BAI, Jiandong, Zhuhai, Guangdong 519070 (CN); HOU, Jianfei, Zhuhai, Guangdong 519070 (CN); LIU, Zhi, Zhuhai, Guangdong 519070 (CN); LIU, Gaiqiang, Zhuhai, Guangdong 519070 (CN)
(74) Representative: Zacco GmbH
(86) International application number: PCT/CN2021/126457
(87) International publication number: WO 2022/179148

(57) **Abstract**

Invented are a fan head and a cooling fan. The fan head includes a housing provided with an air duct, an air inlet and an air outlet of the air duct are provided on opposite side walls of the housing, respectively, wherein the fan head includes a wet pad assembly and a draught fan assembly are disposed in the air duct in an air circulation direction, and the wet pad assembly is fixed to an inner wall of the housing and obliquely disposed relative to an axis of the air duct. According to the fan head of the invention, the wet pad assembly is obliquely arranged relative to the axis of the air duct. Therefore, it is ensured that water can flow through a wet pad to make contact with air when the fan head is at any angle in a swinging process, thereby supplying the air and reducing a temperature. Accordingly, user experience is great.

## Description

### Cross-Reference to Related Application

The invention claims the priority to Chinese Patent Application No. 202110207238.1 filed on February 25, 2021 and entitled "Fan Head and Cooling Fan", which is incorporated in its entirety herein by reference.

### Technical Field

The invention relates to a technical field of cooling fans, and in particular to a fan head and a cooling fan.

### Background

As water evaporates and absorbs heat, a cooling fan is able to supply cold air. A wet pad, an essential component of the cooling fan, functions to enlarge a contact area and prolong contact time between water and air, and makes water absorb heat and evaporate, so as to effectively reduce a temperature. Typically, the wet pad is disposed on a wet pad support, which is fixed at a rear housing or grid of the fan, and rotates as the fan swings.

With the cooling fan applied in a wide range, a circulation fan that is swingable horizontally and vertically has emerged. An air outlet direction of the fan swinging vertically fails to be perpendicular to the wet pad in a vertical state, which significantly narrows the contact area and shortens the contact time between water and air, diminish the cooling effect noticeably. In the dry and chilling winter, people will feel colder once a humidification function of the cooling fan is activated.

### Summary

In order to solve a technical problem that when a cooling fan swings vertically, a wet pad is vertically fixed in a fan head, leading to an unsatisfactory effect in temperature reduction in the background, the invention provides a fan head and a cooling fan. A wet pad assembly is obliquely disposed relative to an axis of an air duct. Therefore, water can flow through a wet pad when the fan head swings vertically, thereby supplying air and reducing a temperature. Accordingly, user experience is great.

In order to realize the above objective, a fan head and a cooling fan in some embodiments of the invention employ the specific technical solutions as follows:
In some embodiments, a fan head includes a housing provided with an air duct, an air inlet and an air outlet of the air duct are provided on opposite side walls of the housing, respectively, wherein the fan head includes a wet pad assembly and a draught fan assembly are disposed in the air duct in an air circulation direction, and the wet pad assembly is fixed to an inner wall of the housing and obliquely disposed relative to an axis of the air duct.

In some embodiments, an included angle between an axis of the wet pad assembly and an axis of the fan head ranges from 120° to 150°.

In some embodiments, the included angle between the axis of the wet pad assembly and the axis of the fan head is 135°.

In some embodiments, the housing includes a front housing and a rear housing that are fixed in a clamped manner, the front housing being cylindrical, an end portion of the front housing being provided with an air outlet grid, the air outlet grid serving as the air inlet of the air duct, an axis of the front housing being distributed in a horizontal direction, the rear housing being hemispherical towards an opening the front housing, and the air inlet of the air duct being provided on the rear housing.

In some embodiments, the wet pad assembly includes a wet pad body and a wet pad support, the wet pad body being fixed in the wet pad support, and the wet pad support being detachably fixed in the rear housing.

In some embodiments, a body of the wet pad support is provided with a buckle, and an inner wall of the rear housing is provided with a fixing frame, the fixing frame being provided with a clamping groove matching the buckle, and the buckle being clamped in the clamping groove.

In some embodiments, the wet pad support is a cuboid frame, a top surface of the wet pad support is provided with a water inlet, the wet pad support includes a supporting table which is disposed on a bottom of the wet pad support, the supporting table is configured to support the wet pad body, a backflow channel is disposed below the supporting table, and a bottom surface of the backflow channel is a flow guide slope inclined towards a downstream direction of the wet pad body.

In some embodiments, an end portion, in an upstream direction of the wet pad body, of the backflow channel is provided with a backflow port.

In some embodiments, the draught fan assembly is disposed between the wet pad assembly and the air outlet of the air duct, and the draught fan assembly includes an electric motor, wherein the electric motor is fixed to an electric motor support, the electric motor support is fixed at an opening of the rear housing, an axis of the electric motor is coincided with the axis of the front housing, and the draught fan assembly includes a fan blade which is disposed on a driving shaft of the electric motor.

In some embodiments, a cooling fan includes a fan base and the above fan head, where the fan base is provided with a head swinging assembly, and the fan head is fixed to the head swinging assembly.

The fan head and the cooling fan of the invention have the advantages as follows:
According to the fan head of the invention, the wet pad assembly is obliquely disposed relative to the axis of the air duct. Therefore, it is ensured that the water can flow through the wet pad to make contact with the air when the fan head is at any angle in the swinging process, thereby supplying the air and reducing the temperature. Accordingly, the user experience is great. Moreover, the wet pad support employs two-way drainage, so that drainage of the wet pad body is smooth no matter which angle the fan head is at. In dry and chilling seasons, the fan head supplies air straight up to humidify air, which will not reduce a temperature of air around the user. Therefore, a mere humidification effect is realized without reducing the temperature.

### Brief Description of the Drawings

Fig. 1 illustrates a schematic structural diagram of a cooling fan according to some embodiments of the present invention;
Fig. 2 illustrates a schematic structural diagram showing that a fan head swings to 45°relative to a horizontal direction according to some embodiments of the present invention;
Fig. 3 illustrates a schematic structural diagram showing that a fan head swings to 90° relative to a horizontal direction according to some embodiments of the present invention; and
Fig. 4 illustrates a sectional view of a wet pad support of some embodiments of the present invention.

Reference numerals in the figures: 1. rear housing; 2. front housing; 21. air outlet grid; 3. wet pad support; 31. water inlet; 32. first limiting block; 33. second limiting block; 34. supporting table; 35. backflow channel; 36. backflow port; 4. wet pad body; 5. draught fan assembly; 51. electric motor; 52. fan blade; 53. electric motor support; and 6. fan base.

### Detailed Description of the Embodiments

In order to have a better understanding of the objectives, structures, and functions of the invention, a fan head and a cooling fan of the invention are further described in detail below with reference to the accompanying drawings.

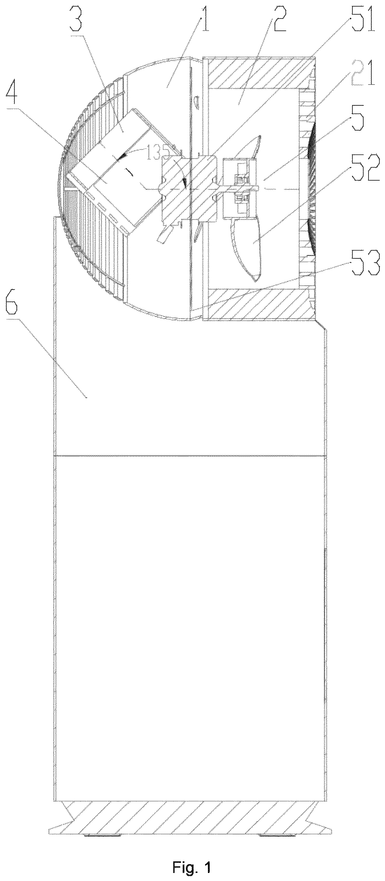

As shown in Fig. 1, the fan head of the invention includes a housing provided with an air duct, an air inlet and an air outlet of the air duct are provided on opposite side walls of the housing, respectively, the fan head includes a wet pad assembly and a draught fan assembly 5 are disposed in the air duct in an air circulation direction, and the wet pad assembly is fixed to an inner wall of the housing and obliquely disposed relative to an axis of the air duct. Therefore, it is ensured that the wet pad assembly is wetted at any angle and makes contact with air when the housing swings vertically, thereby supplying the air and reducing a temperature.

The housing includes a front housing 2 and a rear housing 1 that are fixed in a clamped manner, the front housing 2 is cylindrical, an end portion of the front housing 2 is provided with an air outlet grid 21, the air outlet grid 21 serving as the air inlet of the air duct, an axis of the front housing 2 is distributed in a horizontal direction, the rear housing 1 being hemispherical towards an opening of the front housing 2, and the air inlet of the air duct being provided on the rear housing 1.

Being an essential component of the cooling fan, the wet pad assembly typically includes a wet pad body 4 and a wet pad support 3, the wet pad body 4 being fixed in the wet pad support 3. In order to fix the wet pad assembly in the housing, a body of the wet pad support 3 is provided with a buckle, and an inner wall of the rear housing 1 is provided with a fixing frame, the fixing frame is provided with a clamping groove matching the buckle, and the buckle is clamped into the clamping groove. Therefore, the wet pad assembly is detachably fixed in the housing, so as to make full use of a placement space.

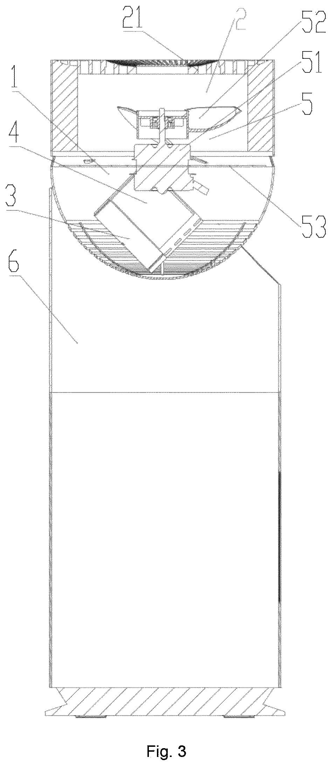

In some embodiments, when the fan head swings vertically, an axis of the fan head is switched between a horizontal state and a vertical state. As shown in Fig. 1, the axis of the fan head is in the horizontal state, and as shown in Fig. 3, the axis of the fan head is in the vertical state. In order to ensure that a wet pad can be wetted when the fan head is at any angle in a vertical swinging process, an included angle between an axis of the wet pad assembly and the axis of the fan head is an obtuse angle.

In some embodiments, the wet pad body 4 is highly adherable to water, and an included angle between the wet pad body 4 and a vertical direction is in a range less than 70°. Therefore, water in the wet pad body 4 will not be separated from the wet pad body 4. In order to ensure a wetting effect of the wet pad body 4, the included angle between the axis of the wet pad assembly and the axis of the fan head ranges from 120° to 150°. In some embodiments, the included angle between the axis of the wet pad assembly and the axis of the fan head is 135°.

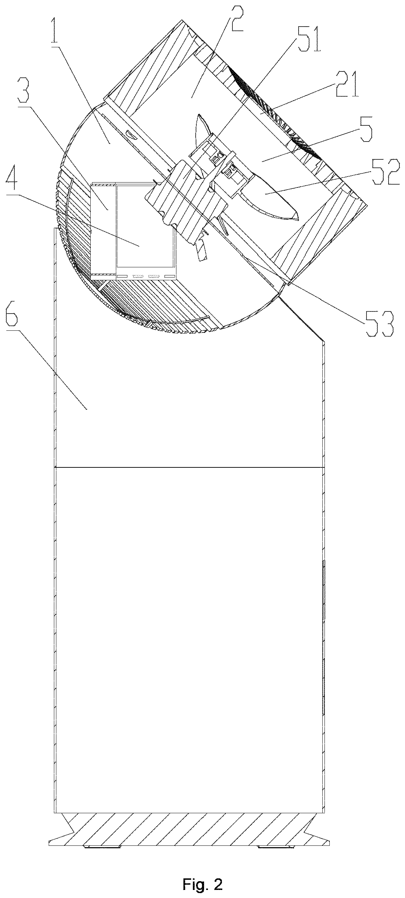

As shown in Fig. 1, when the fan head swings vertically, since the wet pad body 4 is fixed in the rear housing 1, the wet pad body 4 also swings vertically with the swinging fan head. When the fan head horizontally blows air, the wet pad support 3 is at 45° relative to the horizontal direction. When the fan head is inclined upwards by 45° relative to a horizontal plane, the wet pad body 4 is perpendicular to the horizontal plane. As shown in Fig. 2, the fan head is inclined upwards to blow air. As shown in Fig. 3, when the fan head continues to swing obliquely upwards until it is perpendicular to the horizontal plane, the wet pad body 4 is rotated by 90°. In this case, the wet pad body 4 is also at 45° relative to the horizontal plane. When the fan head swings vertically, an included angle between the wet pad body 4 and the horizontal plane is less than 70° all the time, which effectively ensures that the water in the wet pad body 4 will not be separated.

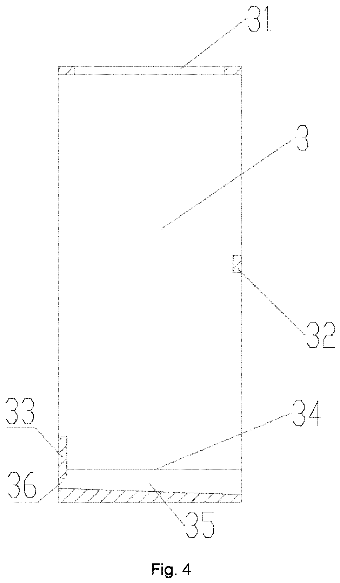

As shown in Fig. 4, the wet pad support 3 is a cuboid frame, a first limiting block 32 and a second limiting block 33 configured to fix the wet pad body 4 is disposed on an end surface of the wet pad support 3 separately, a top surface of the wet pad support 3 is provided with a water inlet 31, the bottom of the wet pad support 3 is provided with a supporting table 34 configured to support the wet pad body 4, and a backflow channel 35 is disposed below the supporting table 34. Water in a water tank drops onto the wet pad body 4 through the water inlet 31. After the wet pad body 4 is wetted, water flows back into the backflow channel 35. A bottom surface of the backflow channel 35 is a flow guide slope inclined towards a downstream direction of the wet pad body 4. In order to ensure that the water in the wet pad body 4 can be smoothly discharged out of the backflow channel 35 when the fan head is rotated to blow air straight up, an end portion, in an upstream direction of the wet pad body 4, of the backflow channel 35 is provided with a backflow port 36. The wet pad support 3 can discharge water in two ways. When individual humidification is required in dry and chilling days, the fan head can blow air straight up and a humidification function is activated, so as to realize the humidification function without reducing a temperature. Accordingly, an integrated effect of mere humidification without temperature reduction is realized.

The draught fan assembly 5 is disposed between the wet pad assembly and the air outlet of the air duct, and the draught fan assembly 5 includes an electric motor 51, wherein the electric motor 51 is fixed to an electric motor support 53, the electric motor support 53 is fixed at an opening of the rear housing 1, an axis of the electric motor 51 is coincided with the axis of the front housing 2, and the draught fan assembly 5 includes a fan blade 52 which is disposed on a driving shaft of the electric motor 51 .

In some embodiments of the invention further provides a cooling fan. The cooling fan includes a fan base 6 and the above fan head, where the fan base 6 is provided with a head swinging assembly, and the fan head is fixed to the head swinging assembly.

According to the fan head, the wet pad assembly is obliquely disposed relative to the axis of the air duct. Therefore, it is ensured that water can flow through the wet pad to make contact with the air when the fan head is at any angle in the swinging process, thereby supplying the air and reducing the temperature. Accordingly, a user experience is great. Moreover, the wet pad support 3 employs two-way drainage, so that drainage of the wet pad body 4 is smooth no matter which angle the fan head is at. In dry and chilling seasons, the fan head supplies the air straight up to humidify the air, which will not reduce a temperature of air around the user. Therefore, a mere humidification effect is realized without reducing the temperature.

It is to be understood that the invention is described through certain examples. Those skilled in the art will appreciate that various changes or substitutions can be made to these features and examples without departing from the spirit and scope of the invention. In addition, these features and examples can be modified to adapt a particular situation and material under the teachings of the invention without departing from the spirit and scope of the invention. Therefore, the invention should not be limited by the particular examples invented herein, and all examples within the scope of the claims of the invention fall within the scope of protection of the invention.

## Claims

1. A fan head, comprising a housing provided with an air duct, an air inlet and an air outlet of the air duct are provided on opposite side walls of the housing, respectively, wherein the fan head comprises a wet pad assembly and a draught fan assembly (5) are disposed in the air duct in an air circulation direction, and the wet pad assembly is fixed to an inner wall of the housing and obliquely disposed relative to an axis of the air duct.

2. The fan head as claimed in claim 1, wherein an included angle between an axis of the wet pad assembly and an axis of the fan head ranges from 120° to 150°.

3. The fan head as claimed in claim 2, wherein the included angle between the axis of the wet pad assembly and the axis of the fan head is 135°.

4. The fan head as claimed in claim 1, wherein the housing comprises a front housing (2) and a rear housing (1) that are fixed in a clamped manner, the front housing (2) being cylindrical, an end portion of the front housing (2) being provided with an air outlet grid (21), the air outlet grid (21) serving as the air inlet of the air duct, an axis of the front housing (2) being distributed in a horizontal direction, the rear housing (1) being hemispherical towards an opening of the front housing (2), and the air inlet of the air duct being provided on the rear housing (1).

5. The fan head as claimed in claim 4, wherein the wet pad assembly comprises a wet pad body (4) and a wet pad support (3), the wet pad body (4) being fixed in the wet pad support (3), and the wet pad support (3) being detachably fixed in the rear housing (1).

6. The fan head as claimed in claim 5, wherein a body of the wet pad support (3) is provided with a buckle, and an inner wall of the rear housing (1) is provided with a fixing frame, the fixing frame being provided with a clamping groove matching the buckle, and the buckle being clamped into the clamping groove.

7. The fan head as claimed in claim 5, wherein the wet pad support (3) is a cuboid frame, a top surface of the wet pad support (3) is provided with a water inlet (31), the wet pad support (3) comprises a supporting table (34) which is disposed on a bottom of the wet pad support (3), the supporting table (34) is configured to support the wet pad body (4), a backflow channel (35) is disposed below the supporting table (34), and a bottom surface of the backflow channel (35) is a flow guide slope inclined towards a downstream direction of the wet pad body (4).

8. The fan head as claimed in claim 7, wherein an end portion, in an upstream direction of the wet pad body (4), of the backflow channel (35) is provided with a backflow port (36).

9. The fan head as claimed in claim 4, wherein the draught fan assembly (5) is disposed between the wet pad assembly and the air outlet of the air duct, and the draught fan assembly (5) comprises an electric motor (51), wherein the electric motor (51) is fixed to an electric motor support (53), the electric motor support (53) is fixed at an opening of the rear housing (1), an axis of the electric motor (51) is coincided with the axis of the front housing (2), and the draught fan assembly (5) comprises a fan blade (52) which is disposed on a driving shaft of the electric motor (51).

10. A cooling fan, comprising a fan base (6) and the fan head as claimed in any one of claims 1-9, wherein the fan base (6) is provided with a head swinging assembly, and the fan head is fixed to the head swinging assembly.
